# FASCICULE DE BREVET EUROPEEN

(11) **EP 3 472 999 B1**
(45) Date de publication et mention de la délivrance du brevet: **26.01.2022**
(21) Numéro de dépôt: 17730116.5
(22) Date de dépôt: 08.06.2017
(51) Int. Cl.: H04M 15/00, H04W 4/24

(54) **PROCÉDÉ ET SYSTÈME DE DÉTECTION DE CONTOURNEMENT DANS UN RÉSEAU DE TÉLÉPHONIE MOBILE**
VERFAHREN UND SYSTEM ZUR ERKENNUNG EINES BYPASSES IN EINEM MOBILFUNKNETZ
METHOD AND SYSTEM FOR DETECTING BYPASS IN A MOBILE TELEPHONIE NETWORK

(30) Priorité: 16.06.2016 FR 1655612
(43) Date de publication de la demande: 24.04.2019
(73) Titulaire: Araxxe, 69006 Lyon (FR)
(72) Inventeur: LESAGE, Xavier, 92200 Neuilly Sur Seine (FR); SCHOLER, Christophe, 69100 Villeurbanne (FR); BENCHEQROUN, Mehdi, 69003 Lyon (FR); MARCHAL, Alexandre, F-69520 GRIGNY (FR)
(74) Mandataire: Weber, Jean-François
(86) Numéro de dépôt international: PCT/EP2017/064004
(87) Numéro de publication internationale: WO 2017/216037

(56) Documents cités:
- EP-A1- 2 490 423
- EP-A1- 2 899 960
- WO-A2-2008/071857
- FR-A1- 2 881 604
- FR-A1- 2 938 392
- GB-A- 2 386 300
- US-A- 5 995 604
- US-A1- 2007 206 511

## Description

### Domaine de l'invention

La présente invention concerne un procédé pour la détection de contournements dans un réseau de téléphonie mobile, en particulier lors de communications téléphoniques. Elle concerne également un système mettant en œuvre un tel procédé.

Le domaine de l'invention est le domaine de la détection de contournements des réseaux de téléphonie mobile, et en particulier lors de communications téléphoniques.

### Etat de la technique

Les réseaux de téléphonie mobile subissent des contournements frauduleux orchestrés par des tiers qui disposent de technologies leur permettant d'intercepter les communications et de se substituer à des opérateurs de réseaux de téléphonie mobile, tout en bénéficiant des services proposés par ces opérateurs.

Des acteurs spécialisés dans ce domaine proposent des technologies pour détecter les contournements, telle que celle décrite par la Demanderesse dans la demande de brevet WO 2008/071857. Des robots d'appels sont utilisés pour réaliser une multitude d'appels téléphoniques avec des numéros d'appels dédiés. Pour chaque appel, un contournement est détecté lorsque l'identifiant d'appelant réellement constaté est différent de l'identifiant d'appelant théorique. Le document EP 2 490 423 divulgue un système de commande pour un système de détection d'une dérivation d'une interconnexion à un réseau de télécommunication. Ce système de commande est configuré pour initier un ou plusieurs appels de test entre au moins un moyen adapté pour émettre un appel de test à un réseau de télécommunication en cours de test en dehors du réseau de télécommunication en cours de test et au moins une sonde de réception avec un abonnement pour terminer l'appel de test, recevoir des informations d'appels de la sonde de réception comprenant une identification de ligne appelant reçue des appels de test respectifs, et analyser l'identification de ligne appelant reçue de telle sorte que la présence de la dérivation puisse être détectée. Un nombre desdits appels de test est récupéré par la sonde de réception.

Cependant, certains fraudeurs ont mis en place une technologie leur permettant d'éviter d'être détectés lors des appels test. Suivant cette technologie, les fraudeurs interceptent et terminent les appels émis uniquement vers des numéros connus et préalablement classés dans une liste, dite « Whitelist » en anglais, et dont ils sont sûrs qu'ils ne sont pas utilisés pour réaliser des appels test.

Les technologies de détection de contournements actuels basés sur des techniques de génération d'appels tests sont impuissantes face à ces fraudeurs.

L'invention a pour but de pallier les inconvénients précités.

Un autre but de l'invention est de proposer un procédé et un système de détection plus efficace de contournements d'un réseau de téléphonie mobile.

En particulier, un autre but de la présente invention est de proposer un procédé et système plus complets de détection de contournements.

### Exposé de l'Invention

L'invention permet d'atteindre au moins l'un des buts précités par un procédé de détection de contournements dans un réseau de téléphonie mobile lors de communications téléphoniques, ledit procédé comprenant au moins une itération d'une phase, dit de test, comprenant les étapes suivantes :
- émission d'au moins un appel, dit test, vers au moins un numéro d'appel, dit cible,
- pour au moins un appel test :
   - mémorisation d'un identifiant d'appelant, dit à l'émission, utilisé en émission,
   - récupération d'un identifiant d'appelant, dit à la réception, reçu pour ledit appel test, en particulier au niveau d'un appareil de réception dudit appel test, et
   - comparaison desdits identifiants d'appelant à l'émission et à la réception ;
caractérisé en ce qu'il comprend, préalablement à ladite phase de test, une phase de constitution d'une liste de numéros cibles, dite liste cible, par sélection de numéros d'appels correspondants à des utilisateurs réels, ledit au moins un numéro cible étant choisi dans ladite liste cible.

Ainsi, le procédé selon l'invention propose de réaliser une détection de contournements avec des appels test émis, par exemple par une pluralité de robots, vers des numéros cibles correspondants à des utilisateurs, ou souscripteurs, réels et non plus à des numéros dédiés à des sessions de test et non attribués à des utilisateurs réels. La détection de contournement par le procédé selon l'invention est donc plus complète et plus efficace, car elle couvre les contournements réalisés par les fraudeurs qui interceptent et terminent des appels émis uniquement vers des numéros faisant partie de leur Whitelist et correspondant à des utilisateurs réels.

Suivant un exemple de réalisation, la phase de constitution de la liste cible peut comprendre une sélection, au hasard, d'au moins un numéro d'appel comme numéro cible.

Autrement dit, au moins un numéro cible faisant partie de la liste cible peut être sélectionné au hasard.

La sélection, au hasard, d'au moins un numéro cible peut être réalisée au sein d'un annuaire de numéros attribués à des utilisateurs réels par un opérateur de téléphonie mobile, ou au sein d'un annuaire de numéros utilisés par des utilisateurs réels dans un pays ou une région, en particulier recevoir des appels à destination dudit pays ou région.

Avantageusement, la sélection d'au moins un numéro d'appel comme numéro cible peut comprendre une émission d'au moins un appel, dit de sélection, audit numéro d'appel.

Ainsi, le procédé selon l'invention permet de vérifier si un numéro d'appel appartient bien à un utilisateur réel, par un appel de sélection, avant de sélectionner ce numéro d'appel comme numéro cible et de l'ajouter dans la liste cible. Si le numéro correspond bien à un utilisateur réel alors il peut être ajouté dans la liste cible, sinon il n'est pas sélectionné.

Avantageusement, la sélection d'au moins un numéro d'appel comme numéro cible peut être réalisée en fonction d'au moins un paramètre prédéterminé relatif à au moins un appel, en particulier à plusieurs appels, réalisé(s), en particulier les appels émis et/ou les appels reçus, avec ledit numéro d'appel, dans le passé.

Plus particulièrement, la sélection d'un numéro d'appel comme numéro cible peut être réalisée par analyse d'un ou plusieurs paramètres relatifs :
- à un nombre prédéterminé d'appels, émis ou reçus, par ce numéro d'appel, dans le passé ; ou
- aux appels, émis ou reçus, par ce numéro d'appel sur une période passée prédéterminée, par exemple sur les 3 ou 6 derniers mois.

Les données relatives aux appels réalisés dans le passé avec un numéro d'appel peuvent être fournies par un opérateur de téléphonique gérant le numéro d'appel. Ces données sont communément appelés les « CDR » pour « Call Detail Record » en anglais.

En particulier, la sélection d'un numéro d'appel comme numéro cible peut être réalisée en fonction :
- d'une durée d'appel,
- d'une fréquence d'appel,
- d'une origine géographique,
- d'une destination géographique,
- d'une heure d'appel, et/ou
- d'un numéro appelé, ou d'un numéro appelant ;
relatifs aux appels passés réalisés, en particulier les appels émis et/ou les appels reçus, avec ledit numéro d'appel.

En effet, en fonction de l'un au moins de ces paramètres, il est possible de déterminer si un numéro d'appel appartient à un utilisateur réel.

Avantageusement, le procédé selon l'invention peut comprendre, pour au moins un numéro cible, une étape de configuration, au niveau d'un appareil utilisateur associé audit numéro d'appel, d'un renvoi d'appel temporaire vers un numéro prédéterminé préalablement à l'étape d'émission d'un appel test.

Une telle étape de renvoi d'appel permet par exemple d'éviter de faire sonner, et plus généralement de perturber le fonctionnement de, l'appareil de l'utilisateur lors de l'appel test et de l'importuner lors de l'appel test.

Préférentiellement, le renvoi d'appel peut être réalisé vers un numéro d'appel dédié ou associé à un robot de réception d'appel.

Un tel robot d'appel peut être configuré pour mémoriser les caractéristiques de l'appel test.

Alternativement, ou en plus, le procédé selon l'invention peut comprendre, pour au moins un numéro cible, une étape de configuration d'un silence temporaire au niveau d'un appareil utilisateur associé audit numéro d'appel, préalablement à l'étape d'émission de l'appel test.

Suivant un exemple de réalisation nullement limitatif, l'étape de configuration d'un renvoi d'appel, respectivement l'étape de configuration d'un silence temporaire, peut être réalisée par au moins un SMS de classe 0, en particulier émis, vers l'appareil utilisateur utilisant le numéro d'appel, ou comportant une carte SIM associée au numéro d'appel.

Alternativement, l'étape de configuration peut être réalisée par émission d'une requête de données Internet ou d'une requête de données de téléphonie mobile.

Alternativement ou en plus, l'étape de configuration peut être réalisée par une application, dite fantôme, préalablement installée dans l'appareil utilisateur, en particulier un appareil utilisateur comportant la carte SIM associée au numéro d'appel.

Une telle application fantôme peut être une application d'un opérateur de téléphonie mobile gérant le numéro cible, ou une application d'un constructeur dudit téléphone mobile, ou encore une application du producteur d'un système d'exploitation dudit appareil mobile.

Une telle application peut être installée sur l'appareil lors de l'attribution de l'appareil à l'utilisateur, ou lors d'une mise jour d'un système d'exploitation de l'appareil utilisateur, ou par l'intermédiaire d'un ou plusieurs SMS de classe 0, ou encore par une requête de données Internet ou de téléphonie mobile.

Dans ce cas, le procédé selon l'invention peut comprendre :
- une activation de l'application fantôme préalablement à un appel test,
- émission d'un ou plusieurs appels test, et
- désactivation de ladite application, après le ou les appels test.

L'étape d'activation, et/ou l'étape de désactivation, de l'application fantôme peut être réalisée par émission d'un SMS de classe 0 activant ou désactivant l'application fantôme, sans que l'utilisateur ne s'en aperçoive.

L'application fantôme peut faire partie du système d'exploitation de l'appareil utilisateur, par exemple comme une fonction intégrée dans ledit système d'exploitation, ou d'une couche logicielle d'un constructeur de l'appareil utilisateur ajoutée audit système d'exploitation.

Au moins une étape d'activation, respectivement de désactivation, d'un silence, ou d'un renvoi d'appel, temporaire peut être réalisée par un robot d'appel utilisé pour réaliser le ou les appels de test.

Par exemple, lorsqu'une étape d'activation, respectivement de désactivation, comprend une émission d'un SMS de classe 0, ou d'une requête de données Internet ou d'une requête de téléphonie mobile, ledit SMS ou ladite requête peut être émis(e) par un robot d'appel prévu pour réaliser le ou les appels de test.

Suivant un exemple de réalisation, pour au moins un appel test, l'identifiant d'appelant à la réception peut être récupéré, depuis un appareil utilisateur ayant reçu ledit appel test, par un message, en particulier un SMS de classe « 0 », émis par ledit appareil utilisateur vers un appareil distant.

Alternativement, l'identifiant d'appelant à la réception peut être récupéré par émission, depuis un appareil utilisateur ayant reçu ledit appel test, de données Internet ou de données de téléphonie mobile.

Le numéro, et plus généralement les données, pour contacter l'appareil distant peuvent être communiquées à l'appareil utilisateur par un SMS de classe 0, ou par une application fantôme exécutée par l'appareil utilisateur, ou encore par des données Internet ou de données de téléphonie mobile.

L'appareil distant peut être un serveur de gestion, un serveur d'un opérateur mobile ou encore un robot d'appel, en particulier un robot ayant émis l'appel test.

Alternativement ou en plus, pour au moins un appel test, l'identifiant d'appelant à la réception peut être récupéré, par analyse de données fournies par l'opérateur pour le numéro cible.

Il est par exemple possible d'analyser les données, ou enregistrement de transactions téléphoniques, également appelé « call detail records » ou « CDR » en anglais, fournies par l'opérateur en charge des services associés au numéro cible pour identifier le numéro d'appelant à la réception pour un appel test reçu, par exemple en fonction de la date et de l'heure d'émission de l'appel test.

Cette étape d'analyse prend en compte :
- les données des appels test réalisés vers ce numéro cible, par exemple récupérées auprès des robots d'appels, et également appelées données CDR à l'émission dans la suite ; et
- les données CDR récupérées auprès de l'opérateur en charge des services associés au numéro cible, et également appelées données CDR à la réception.

En particulier, pour un numéro cible le procédé selon l'invention peut comprendre une étape d'analyse automatisée des données CDR pour identifier, dans les données CDR à la réception, un ou plusieurs appels test. Pour chaque appel test identifié dans les données CDR à la réception, il est alors possible d'extraire le numéro d'appelant à la réception et de comparer ce numéro d'appelant à la réception au numéro d'appelant à l'émission qui, lui, est accessible dans les données CDR à l'émission.

Selon un mode de réalisation, l'identification d'un ou plusieurs appels test dans les données CDR à la réception fournies par un opérateur pour un numéro cible peut être réalisée en fonction d'une combinaison quelconque d'au moins un des paramètres suivants :
- statut de fin d'appel, également appelé code de réponse SIP ou GSM, indiquant le statut de l'appel et notamment s'il a abouti ou non ;
- heure de début d'appel ou heure de fin d'appel ;
- une durée d'appel ;
- une tolérance, dite offset, appliquée à l'heure de début ou heure de fin d'appel, tel que par exemple +/- 2 secondes ;
- une tolérance, dite threshold, appliquée à la durée d'appel, tel que par exemple +/- 4 secondes ; et
- éventuellement, une différence de fuseau horaire entre les CDR en émission et réception.

Suivant un exemple de réalisation nullement limitatif, l'étape d'analyse des données CDR à la réception récupérées auprès de l'opérateur gérant un numéro cible, pour y identifier un ou plusieurs appels test émis vers ce numéro cible, peut comprendre les étapes suivantes.

Une étape identifie tous les appels test émis vers ce numéro cible. Pour ce faire les données CDR à l'émission de tous les robots d'appel peuvent être analysées et tous les appels test émis vers le numéro cible peuvent être identifiés.

Ensuite, dans les données CDR à la réception fournies par l'opérateur pour le numéro cible, un appel reçu unique, correspondant à chaque appel test, est identifié comme étant celui qui satisfait une combinaison quelconque, et en particulier chacune, des conditions suivantes :
- un statut de fin d'appel identique à celui indiqué dans les CDR à l'émission de l'appel test ;
- une heure de fin, respectivement de début, correspond à l'heure de fin, respectivement de début, indiquée dans les CDR à l'émission de l'appel test à une tolérance près, dite offset, par exemple de 2 secondes, après prise en compte d'une différence éventuelle de fuseau horaire ;
- une durée correspond à la durée de l'appel test indiquée dans les CDR à l'émission, à laquelle est appliquée une tolérance, dite threshold, par exemple de 4 secondes.

Suivant une caractéristiques avantageuse, le procédé selon l'invention résout la problématique de détection de faux-positif en confirmant qu'un identifiant d'appelant à la réception suspicieux détecté dans les CDR à la réception d'un numéro cible est un identifiant utilisé pour un contournement.

En déterminant si l'identifiant suspicieux apparait dans les CDR de plusieurs numéros cibles, par analyse des CDR à la réception desdits plusieurs numéros cible, alors il est fort probable que l'identifiant suspicieux est utilisé pour réaliser un contournement.

Suivant un autre aspect de l'invention, il est proposé un système de détection de contournements dans un réseau de téléphonie mobile lors de communications téléphoniques, ledit système comprenant :
- au moins un robot, dit d'appel, pour réaliser des appels test vers un ou plusieurs numéros cibles, et
- au moins un serveur, configuré pour réaliser ou déclencher toutes les étapes du procédé selon l'invention.

Dans la présente demande, un identifiant d'appelant peut être un numéro d'appel éventuellement associé à son format national ou international, préfixé « + » ou « 00 »

### Description des figures et modes de réalisation

D'autres avantages et caractéristiques apparaîtront à l'examen de la description détaillée d'exemples nullement limitatifs, et des dessins annexés sur lesquels :
- la FIGURE 1 est une représentation schématique d'un exemple de réalisation non limitatif du procédé selon l'invention ;
- la FIGURE 2 est une représentation schématique d'un exemple du système selon l'invention ; et
- la FIGURE 3 est une représentation schématique d'un autre exemple de réalisation non limitatif du procédé selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

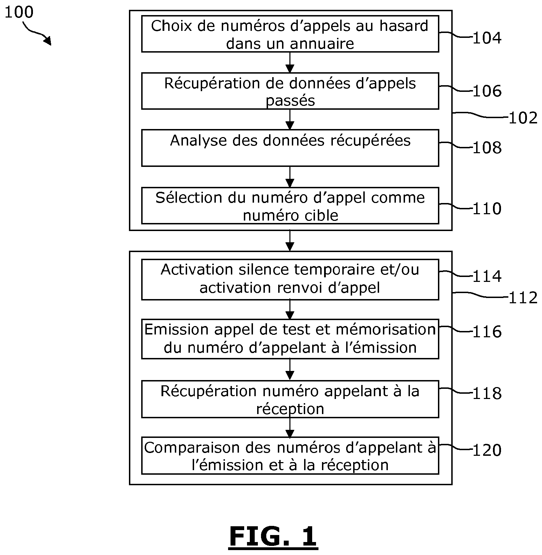

La FIGURE 1 est une représentation schématique d'un exemple de réalisation non limitatif du procédé de détection de contournements selon l'invention, dans un réseau de téléphonie donné.

Le procédé 100 représenté sur la FIGURE 1 comprend une phase 102 de constitution d'une liste de numéros cibles, dit liste cible. Cette phase 102 a pour but d'identifier des numéros appartenant à des utilisateurs réels recevant de vrais appels de la part de véritables utilisateurs.

Pour ce faire, des numéros d'appels sont choisis, par exemple au hasard, dans un annuaire de numéros, lors d'une étape 104.

Pour chaque numéro d'appel, les données relatives à des appels réalisés avec ce numéro d'appel, par exemple dans les trois derniers mois, sont récupérées lors d'une étape 106. Ces données peuvent être récupérées par exemple auprès d'un opérateur de téléphonie mobile gérant ce numéro d'appel.

Ensuite, lors d'une étape 108, pour chaque numéro d'appel, les données récupérées sont analysées pour déterminer si ce numéro d'appel correspond à un utilisateur réel ayant reçu des appels nationaux et internationaux. Pour ce faire, les données récupérées sont analysées pour déterminer au moins un des paramètres suivants :
- durée d'appel,
- fréquence d'appel,
- origine géographique,
- destination géographique,
- heure d'appel, et/ou
- numéro appelé, ou numéro appelant ;
pour les appels reçus par ce numéro d'appel.

Si le numéro d'appel correspond à un utilisateur réel, alors il est sélectionné comme numéro cible lors d'une étape 110, sinon il est éliminé.

La phase 102 fournit une liste de numéros cibles correspondant à des utilisateurs réels.

Le procédé 100 comprend, après la phase 102 de constitution de la liste cible, une ou plusieurs itération(s) d'une phase 112 de test pour un ou plusieurs numéros cible choisis dans la liste cible.

La phase de test 112 comprend pour chaque numéro cible testé, les étapes suivantes.

Une étape 114 réalise une activation, au niveau du téléphone équipé de la carte SIM associée au numéro cible :
- d'un silence temporaire, et/ou
- d'un renvoi d'appel vers un numéro tierce, par exemple un numéro d'appel d'une carte SIM utilisé par un robot de réception d'appel.

L'activation du silence temporaire, et/ou d'un renvoi d'appel, au niveau de l'appareil utilisateur peut être réalisée par émission d'un SMS de classe « 0 », ou d'une requête, activant le silence temporaire :
- directement ou
- par l'intermédiaire d'une application, ou fonction, fantôme :
   ▪ indépendante d'un, ou
   ▪ intégrée dans un ;
système d'exploitation de l'appareil utilisateur ou dans une couche logicielle ajoutée au système d'exploitation, telle que par exemple une couche logicielle ajoutée par l'opérateur de téléphonie mobile ayant fourni le téléphone ou gérant le numéro cible.

Ainsi, lorsque l'appareil de l'utilisateur recevra un appel test, le téléphone ne sonnera pas, et l'appel sera éventuellement transféré vers un numéro et ses caractéristiques seront enregistrées par un robot de réception d'appel.

En cas de renvoi d'appel, le numéro tierce vers lequel l'appel doit être renvoyé peut être communiqué à l'appareil utilisateur par un SMS de classe 0 ou par une requête. La requête peut être une requête Internet ou une requête téléphonie mobile.

Le SMS ou la requête peut être émis(e) par un robot d'appel prévu pour réaliser des appels de test.

Lors d'une étape 116, un appel test est émis vers le numéro cible. Cet appel est alors reçu par l'appareil utilisateur. Ce dernier ne signale pas l'appel reçu car :
- il a été mis en silence, et/ou
- il transfert l'appel vers un numéro tierce.

L'appel test est émis, par exemple par un robot d'appel dont le numéro d'appel est connu. Ce numéro d'appel est mémorisé comme identifiant d'appelant à l'émission.

Lors d'une étape 118, l'identifiant d'appelant reçu au niveau de l'appareil utilisateur est récupéré. L'identifiant d'appelant à la réception peut être récupéré de différentes manières. De manière non limitative, l'identifiant d'appelant à la réception peut être transmis par l'appareil utilisateur recevant l'appel, en particulier par l'application (ou la fonction) fantôme installée dans ledit appareil, vers un appareil distant, tel qu'un serveur distant ou le robot ayant émis l'appel, par exemple dans un SMS de classe 0, ou un paquet de données Internet ou encore un paquet de données de téléphonie mobile.

Alternativement, l'identifiant d'appelant à la réception peut être récupéré par analyse de données d'appel du numéro cible, fournies par l'opérateur de téléphonie mobile. Dans ce cas, l'appel test reçu peut être identifié, dans les données fournies par l'opérateur de téléphonie, en fonction de la date et de l'heure d'émission dudit appel cible, par exemple.

Une fois l'identifiant d'appelant à la réception récupéré, le procédé 100 comprend une étape 120 de comparaison de cet identifiant d'appelant à la réception à l'identifiant d'appelant à l'émission, mémorisé à l'étape 116.

Si les deux identifiants d'appelants sont identiques alors aucun contournement n'est détecté.

Si les deux identifiants d'appelants sont différents alors un contournement est détecté. L'identifiant d'appelant à la réception est un numéro d'appel correspondant à une carte SIM ou une ligne de téléphonique servant à réaliser le contournement.

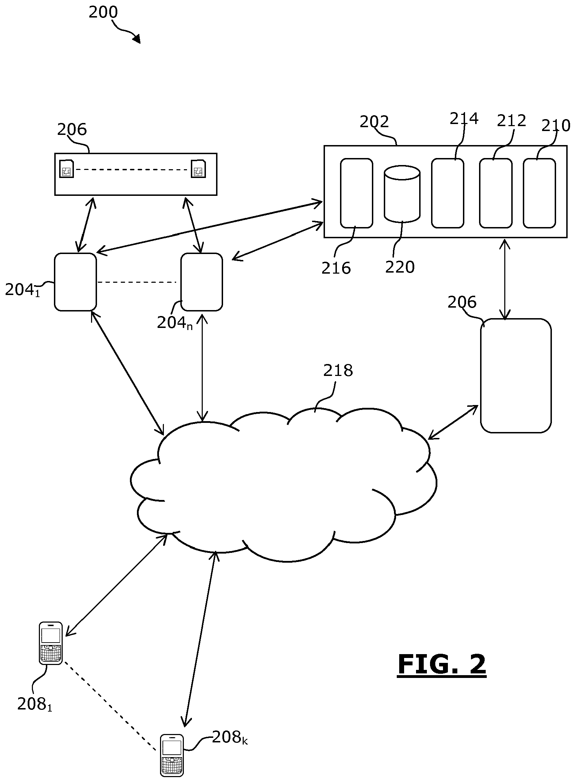

La FIGURE 2 est une représentation schématique d'un exemple de réalisation non limitatif d'un système de détection de contournements, selon l'invention.

Le système 200 représenté sur la FIGURE 2 comprend un serveur 202. Le serveur 202 est en communication avec des robots d'appel 204₁-204ₙ, localisés sur un même site, ou sur des sites différents distants les uns des autres. Le serveur 202 peut être en communication avec chacun des robots 204 au travers d'un réseau de communication de type Internet, par exemple via un VPN.

Les robots d'appels 204 sont en communication avec un serveur 206 de cartes SIM susceptible de se trouver sur un site distant des robots d'appel 204, ou sur le(s) même(s) site(s) que les robots d'appel 204. Le serveur de carte SIM 206 peut être en communication avec chacun des robots 204 au travers d'un réseau de communication de type Internet, par exemple via un VPN.

Les robots d'appels 204 sont agencés pour émettre des appels test vers des téléphones 208₁-208ₖ, chacun équipé d'une carte SIM associée à un numéro cible utilisé par un utilisateur réel.

Le serveur 202 comporte des modules logiciels et/ou matériels configurés pour réaliser la phase de constitution d'une liste de numéros cibles. En particulier, le serveur 202 comprend un module 210 configuré pour récupérer et analyser les données relatives à une multitude de numéros d'appels en vue de sélectionner, en fonction de règles prédéterminées, des numéros d'appel cibles et constituer une liste cible.

Le serveur 202 comporte un module 212 de corrélation réalisant une analyse de données d'appels relatives aux numéros cibles appelés lors des appels test pour extraire le numéro d'appelant à la réception en fonction par exemple de la date et de l'heure d'appel de chaque appel test.

Le serveur 202 comporte en outre un module 214 réalisant une comparaison d'identifiants d'appelant à l'émission et à la réception pour déterminer s'il existe ou non un contournent lors d'un appel test.

Le serveur 202 comporte un module 216 contrôlant et commandant les robots d'appel 204 pour réaliser des appels test vers un ou plusieurs appareils utilisateur 208, au travers d'un réseau de téléphonie mobile 218.

Le module de commande 216 peut également déclencher l'envoi par au moins un robot d'appel 204, vers au moins un appareil utilisateur 208 :
- d'au moins un SMS de classe 0, ou
- d'au moins une requête internet ou une requête de téléphonie mobile ;
préalablement à la réalisation d'un appel test vers cet appareil utilisateur 208.

Le serveur 202 peut en outre comprendre des moyens de mémorisation 220 pour mémoriser différentes données telles que la liste cible, les identifiants d'appelants à l'émission et à la réception pour chaque appel test, etc.

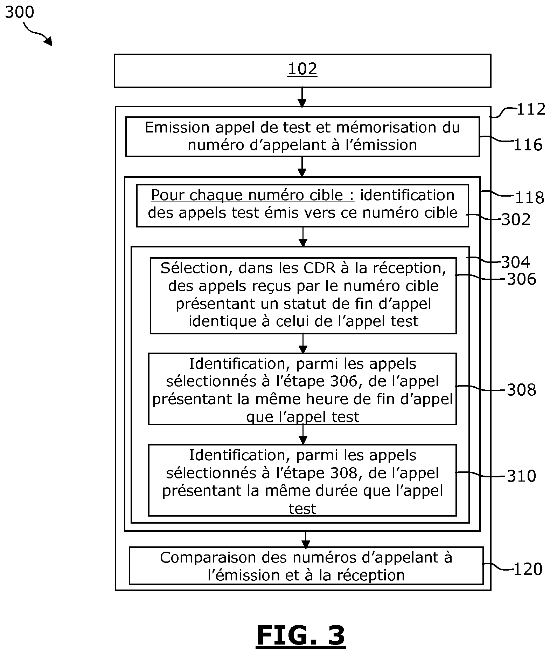

La FIGURE 3 est une représentation schématique d'un autre exemple de réalisation non limitatif du procédé de détection de contournements selon l'invention, dans un réseau de téléphonie donné.

Le procédé 300 représenté sur la FIGURE 3 comprend toutes les étapes du procédé 100 de la FIGURE 1, sauf l'étape 114.

De plus, dans le procédé 300, l'étape 118 de récupération du numéro d'appelant à la réception est réalisée par analyse des données CDR à la réception fournies par l'opérateur.

Pour ce faire, l'étape 118 comprend les étapes suivantes.

Pour chaque numéro cible, une étape 302 identifie tous les appels test émis vers ce numéro cible. Pour ce faire, les données CDR à l'émission de tous les robots d'appel sont analysées et tous les appels test émis par les robots vers ce numéro cible sont identifiés et mémorisés.

Ensuite, pour chaque appel test émis vers un numéro cible, et identifié lors de l'étape 302, une étape 304 identifie ledit appel test dans les CDR à la réception dudit numéro cible fournies par l'opérateur gérant ledit numéro cible. Cette étape 304 comprend :
- une étape 306 qui sélectionne, dans les données CDR à la réception, les appels reçus dont les statuts de fin d'appel correspondent au statut de fin d'appel de l'appel test ;
- parmi les appels sélectionnés lors de l'étape 306, une étape 308 sélectionne les appels reçus dont les heures de fin correspondent à l'heure de fin de l'appel test à une tolérance près, dite offset, par exemple de 2 secondes, après prise en compte d'une différence éventuelle de fuseau horaire ; et
- parmi les appels sélectionnés lors de l'étape 308, l'étape 310 identifie l'appel reçu dont la durée correspond à la durée de l'appel test, à laquelle est appliquée une tolérance, dite threshold, par exemple de 4 secondes.

Les étapes 306-310 sont réalisées pour chaque appel test émis vers un numéro cible et identifié lors de l'étape 118.

L'étape 118 est réalisée pour chaque numéros cible.

Ensuite, une fois que les appels test sont identifiés dans les CDR à la réception de tous les numéros cible, l'étape 120 de comparaison des numéros d'appelant est réalisée pour chaque appel test.

## Revendications

1. Procédé (100;300) de détection de contournements dans réseau de téléphonie mobile (218) lors de communications téléphoniques, ledit procédé (100;300) comprenant au moins une itération d'une phase (112), dit de test, comprenant les étapes suivantes :
- émission (116) d'au moins un appel, dit test, vers au moins un numéro d'appel, dit cible,
- pour au moins un appel test :
- mémorisation (116) d'un identifiant d'appelant, dit à l'émission, utilisé en émission,
- récupération d'un identifiant d'appelant, dit à la réception, reçu pour ledit appel test, et
- comparaison (120) desdits identifiants d'appelant à l'émission et à la réception ;
**caractérisé en ce qu'**il comprend, préalablement à ladite phase de test (112), une phase (102) de constitution d'une liste de numéros cibles, dite liste cible, par sélection de numéros d'appel correspondants à des utilisateurs réels, ledit au moins un numéro cible étant choisi dans ladite liste cible.

2. Procédé (100;300) selon la revendication précédente, **caractérisé en ce que** la phase de constitution (102) comprend une sélection, au hasard, d'au moins un numéro d'appel comme numéro cible.

3. Procédé (100;300) selon l'une quelconque des revendications précédentes, **caractérisé en ce que** la sélection d'au moins un numéro d'appel comme numéro cible comprend une émission d'un appel, dit de sélection, audit numéro d'appel.

4. Procédé (100;300) selon la revendication 1, **caractérisé en ce que** la sélection d'au moins un numéro d'appel comme numéro cible est réalisée par analyse d'au moins un paramètre d'au moins une communication réalisée avec ledit numéro d'appel, dans le passé.

5. Procédé (100;300) selon la revendication précédente, **caractérisé en ce que** la sélection d'un numéro d'appel comme numéro cible est réalisée en fonction :
- d'une durée d'appel,
- d'une fréquence d'appel,
- d'une origine géographique,
- d'une destination géographique,
- d'une heure d'appel, et/ou
- d'un numéro appelé ;
relatif(s) aux appels réalisés avec ledit numéro d'appel dans le passé.

6. Procédé (100;300) selon l'une quelconque des revendications précédentes, **caractérisé en ce que**, pour au moins un appel test, l'identifiant d'appelant à la réception est récupéré, par analyse (118) de données fournies par l'opérateur pour le numéro cible.

7. Procédé (100;300) selon la revendication précédente, **caractérisé en ce que** l'analyse (118) des données fournies pour le numéro cible par l'opérateur comprend une identification (302-310) d'un ou plusieurs appels test dans lesdites données en fonction d'une combinaison quelconques d'au moins un des paramètres suivants :
- statut de fin d'appel ;
- heure de début d'appel ou heure de fin d'appel ;
- une durée d'appel ;
- une tolérance, dite threshold, appliquée à la durée d'appel ;
- une tolérance, dite offset, appliquée à l'heure d'appel ; et
- une différence de fuseau horaire entre le lieu d'émission des appels test et le lieu où se trouve le numéro cible.

8. Procédé (100) selon l'une quelconque des revendications précédentes, **caractérisé en ce qu'**il comprend, pour au moins un numéro cible, une étape (114) de configuration, au niveau d'un appareil utilisateur (208) associé audit numéro d'appel, d'un renvoi d'appel temporaire vers un numéro prédéterminé préalablement à l'étape (116) d'émission d'un appel test.

9. Procédé (100) selon la revendication précédente, **caractérisé en ce que** le renvoi d'appel est réalisé vers un numéro d'appel dédié ou associé à un robot de réception d'appel.

10. Procédé (100) selon l'une quelconque des revendications précédentes, **caractérisé en ce qu'**il comprend, pour au moins un numéro cible, une étape (114) de configuration d'un silence temporaire au niveau d'un appareil utilisateur (208) associé audit numéro d'appel, préalablement à l'étape (116) d'émission d'un appel test.

11. Procédé (100) selon l'une quelconque des revendications 8 à 10, **caractérisé en ce que** l'étape (114) de configuration d'un renvoi d'appel temporaire, respectivement d'un silence temporaire, est réalisée par au moins un SMS de classe 0.

12. Procédé (100) selon l'une quelconque des revendications 8 à 11, **caractérisé en ce que** l'étape de configuration (114) est réalisée par une application, dite fantôme, préalablement installée dans l'appareil utilisateur (208).

13. Procédé (100) selon la revendication précédente, **caractérisé en ce que** l'application fantôme fait partie du système d'exploitation de l'appareil utilisateur (208) ou d'une couche logicielle d'un constructeur de l'appareil utilisateur.

14. Procédé (100) selon l'une quelconque des revendications précédentes, **caractérisé en ce que**, pour au moins un appel test, l'identifiant d'appelant à la réception est récupéré, depuis un appareil utilisateur ayant reçu ledit appel test, par un message, en particulier un SMS de classe « 0 », émis par ledit appareil utilisateur (208) vers un appareil distant.

15. Système (200) de détection de contournements dans un réseau de téléphonie mobile (18) lors de communications téléphoniques, ledit système (200) mettant en œuvre le procédé (100;300) selon l'une quelconque des revendications précédentes et comprenant un serveur (202) en communication avec des robots d'appel (204₁-204ₙ).

## Patentansprüche

1. Verfahren (100; 300) zur Erkennung von Bypässen in einem Mobilfunknetz (218) bei Telefonkommunikationen, wobei das Verfahren (100; 300) mindestens eine Iteration einer Phase (112), Testphase genannt, umfasst, das die folgenden Schritte umfasst:
- Senden (116) mindestens eines Anrufs, Testanruf genannt, zu mindestens einer Rufnummer, Zielnummer genannt,
- für mindestens einen Testanruf:
- Speichern (116) einer Anruferkennung, Sendekennung genannt, die beim Senden verwendet wird,
- Abruf einer Anruferkennung, Empfangskennung genannt, die für den Testanruf empfangen wird, und
- Vergleichen (120) der Anruferkennungen beim Senden und beim Empfang;
**dadurch gekennzeichnet, dass** es vor der Testphase (112) eine Phase (102) der Erstellung einer Zielrufnummernliste, Zielliste genannt, durch Auswahl von Rufnummern, die realen Benutzern entsprechen, umfasst, wobei mindestens eine Zielnummer aus der Zielliste ausgewählt wird.

2. Verfahren (100; 300) nach dem vorstehenden Anspruch, **dadurch gekennzeichnet, dass** die Phase der Erstellung (102) eine zufällige Auswahl mindestens einer Rufnummer als Zielnummer umfasst.

3. Verfahren (100; 300) nach einem der vorstehenden Ansprüche, **dadurch gekennzeichnet, dass** die Auswahl mindestens einer Rufnummer als Zielnummer ein Senden eines Anrufs, Auswahlanruf genannt, an die Rufnummer umfasst.

4. Verfahren (100; 300) nach Anspruch 1, **dadurch gekennzeichnet, dass** die Auswahl mindestens einer Rufnummer als Zielnummer durch Analyse mindestens eines Parameters mindestens einer Kommunikation, die mit der Rufnummer in der Vergangenheit ausgeführt wurde, ausgeführt wird.

5. Verfahren (100; 300) nach dem vorstehenden Anspruch, **dadurch gekennzeichnet, dass** die Auswahl einer Rufnummer als Zielnummer ausgeführt wird in Abhängigkeit von:
- einer Anrufdauer,
- einer Anrufhäufigkeit,
- einem geographischen Ursprung,
- einem geographischen Zielort,
- einer Anrufuhrzeit, und/oder
- einer angerufenen Nummer;
im Zusammenhang mit Anrufen, die mit der Rufnummer in der Vergangenheit ausgeführt wurden.

6. Verfahren (100; 300) nach einem der vorstehenden Ansprüche, **dadurch gekennzeichnet, dass** für mindestens einen Testanruf die Anruferkennung bei Empfang durch Analyse (118) von Daten, die von dem Betreiber für die Zielnummer geliefert werden, gewonnen wird.

7. Verfahren (100; 300) nach dem vorstehenden Anspruch, **dadurch gekennzeichnet, dass** die Analyse (118) der Daten, die für die Zielnummer von dem Betreiber geliefert werden, eine Identifikation (302-310) eines oder mehrerer Testanrufe in den Daten in Abhängigkeit von einer beliebigen Kombination mindestens einer der folgenden Parameter umfasst:
- Status am Anrufende;
- Anfangsuhrzeit des Anrufs oder Enduhrzeit des Anrufs;
- eine Anrufdauer;
- eine Toleranz, "Threshold"-Toleranz genannt, die an die Anrufdauer angewandt wird;
- eine Toleranz, "Offset"-Toleranz genannt, die an die Anrufuhrzeit angewandt wird;
- einen Zeitzonenunterschied zwischen dem Sendeort der Testanrufe und dem Ort, an dem sich die Zielnummer befindet.

8. Verfahren (100) nach einem der vorstehenden Ansprüche, **dadurch gekennzeichnet, dass** es für mindestens eine Zielnummer einen Konfigurationsschritt (114) auf dem Niveau eines Benutzergeräts (208), das mit der Rufnummer assoziiert ist, einer zeitweiligen Anrufweiterleitung zu einer vorbestimmten Nummer vor dem Sendeschritt (116) eines Testanrufs umfasst.

9. Verfahren (100) nach dem vorstehenden Anspruch, **dadurch gekennzeichnet, dass** die Anrufweiterleitung zu einer dedizierten Rufnummer oder Rufnummer, die mit einem Anrufempfangsroboter assoziiert ist, ausgeführt wird.

10. Verfahren (100) nach einem der vorstehenden Ansprüche, **dadurch gekennzeichnet, dass** es für mindestens eine Zielnummer einen Konfigurationsschritt (114) einer zeitweiligen Pause auf dem Niveau eines Benutzergeräts (208), das mit der Rufnummer assoziiert ist, vor dem Sendeschritt (116) eines Testanrufs umfasst.

11. Verfahren (100) nach einem der Ansprüche 8 bis 10, **dadurch gekennzeichnet, dass** der Konfigurationsschritt (114) einer zeitweiligen Anrufweiterleitung bzw. einer zeitweiligen Pause von mindestens einer SMS mit Klasse 0 ausgeführt wird.

12. Verfahren (100) nach einem der Ansprüche 8 bis 11, **dadurch gekennzeichnet, dass** der Konfigurationsschritt (114) von einer Anwendung, Phantomanwendung genannt, die vorab in dem Benutzergerät (208) installiert wird, ausgeführt wird.

13. Verfahren (100) nach dem vorstehenden Anspruch, **dadurch gekennzeichnet, dass** die Phantomanwendung Teil des Betriebssystems des Benutzergeräts (208) oder einer Softwareschicht eines Herstellers des Benutzergeräts ist.

14. Verfahren (100) nach einem der vorstehenden Ansprüche, **dadurch gekennzeichnet, dass** für mindestens einen Testanruf die Anruferkennung beim Empfang von einem Benutzergerät gewonnen wird, das den Testanruf empfangen hat, durch eine Meldung, insbesondere eine SMS der Klasse "0", die von dem Benutzergerät (208) zu einem entfernten Gerät gesandt wird.

15. System (200) zur Erkennung von Bypässen in einem Mobilfunknetz (18) bei Telefonkommunikationen, wobei das System (200) das Verfahren (100; 300) nach einem der vorstehenden Ansprüche ausführt und einen Server (202) zur Kommunikation mit Anrufrobotern (204₁ bis 204ₙ) umfasst.

## Claims

1. Method (100; 300) for detecting bypasses in a mobile telephony network (218) during telephone communications, said method (100; 300) comprising at least one iteration of a so-called test phase (112), comprising the following steps:
- sending (116) at least one so-called test call to at least one so-called target call number,
- for at least one test call:
- storing (116) a so-called sending caller identifier, used in sending,
- recovering a so-called reception caller identifier, received for said test call, and
- comparing (120) said sending and reception caller identifiers;
**characterised in that** it comprises, prior to said test phase (112), a phase (102) of forming a list of target numbers, referred to as a target list, by selecting call numbers corresponding to actual users, said at least one target number being selected from said target list.

2. Method (100; 300) according to the preceding claim, **characterised in that** the formation phase (102) comprises a selection, at random, of at least one call number as a target number.

3. Method (100; 300) according to either one of the preceding claims, **characterised in that** selecting at least one call number as a target number comprises sending a so-called selection call to said call number.

4. Method (100; 300) according to claim 1, **characterised in that** the selection of at least one call number as a target number is implemented by analysing at least one parameter of at least one communication made with said call number in the past.

5. Method (100; 300) according to the preceding claim, **characterised in that** the selection of a call number as a target number is implemented according to:
- a call duration,
- a call frequency,
- a geographical origin,
- a geographical destination,
- a time at which a call is made, and/or
- a called number;
relating to the calls made with said call number in the past.

6. Method (100; 300) according to any one of the preceding claims, **characterised in that**, for at least one test call, the reception caller identifier is recovered by analysing (118) data supplied by the operator for the target number.

7. Method (100; 300) according to the preceding claim, **characterised in that** the analysis (118) of the data supplied for the target number by the operator comprises an identification (302-310) of one or more test calls in said data according to any combination of at least one of the following parameters:
- end-of-call status;
- time of start of call or time of end of call;
- a call duration;
- a so-called threshold tolerance applied to the call duration;
- a so-called offset tolerance applied to the time at which the call was made; and
- a difference in time zone between the place of sending the test calls and the place where the target number is located.

8. Method (100) according to any one of the preceding claims, **characterised in that** it comprises, for at least one target number, a step (114) of configuring, at a user apparatus (208) associated with said call number, a temporary call forwarding to a predetermined number prior to the step (116) of sending a test call.

9. Method (100) according to the preceding claim, **characterised in that** the call forwarding is made to a dedicated call number or one associated with a call reception robot.

10. Method (100) according to any one of the preceding claims, **characterised in that** it comprises, for at least one target number, a step (114) of configuring a temporary silence at a user apparatus (208) associated with said call number, prior to the step (116) of sending a test call.

11. Method (100) according to any one of claims 8 to 10, **characterised in that** the step (114) of configuring a temporary call forwarding, or respectively of a temporary silence, is implemented by at least one class 0 SMS.

12. Method (100) according to any one of claims 8 to 11, **characterised in that** the configuration step (114) is implemented by a so-called phantom application, previously installed in the user apparatus (208).

13. Method (100) according to the preceding claim, **characterised in that** the phantom application forms part of the operating system of the user apparatus (208) or of a software layer of a manufacturer of the user apparatus.

14. Method (100) according to any one of the preceding claims, **characterised in that**, for at least one test call, the reception calling identifier is recovered, from a user apparatus that received said test call, by a message, in particular a class 0 SMS, sent by said user apparatus (208) to a remote apparatus.

15. System (200) for detecting bypasses in a mobile telephony network (18) during telephone communications, said system (200) implementing the method (100; 300) according to any one of the preceding claims and comprising a server (202) in communication with call robots (204₁-204ₙ).
